# FASCICULE DE BREVET EUROPEEN

(11) **EP 1 813 512 B1**
(45) Date de publication et mention de la délivrance du brevet: **04.11.2009**
(21) Numéro de dépôt: 07100127.5
(22) Date de dépôt: 04.01.2007
(51) Int. Cl.: B62D 25/04

(54) **Montant de pare-brise et procédé de fabrication d'un tel montant**
Windschutzscheibepfosten und sein Herstellungsverfahren
Windscreen post and method of manufacturing said post

(30) Priorité: 30.01.2006 FR 0600835
(43) Date de publication de la demande: 01.08.2007
(73) Titulaire: PEUGEOT CITROËN AUTOMOBILES SA, 78140 Velizy-Villacoublay (FR)
(72) Inventeur: Gavillon, Paul, 25490 Dampierre les Bois (FR); Guesney, Emmanuel, 25200 Montbeliard (FR)

(56) Documents cités:
- DE-A1- 10 055 274
- DE-A1- 10 121 688
- US-A1- 2003 227 192

## Description

La présente invention concerne un montant de pare-brise pour un véhicule automobile, ainsi qu'un procédé de fabrication d'un tel montant.

L'invention s'applique tout particulièrement dans le cas d'un pare-brise avant fortement incliné, que l'on retrouve sur les véhicules modernes, notamment pour des raisons d'esthétique et/ou d'aérodynamisme.

Il est connu dans l'état de la technique, par exemple d'après le document US-2003/0227192-A1, un montant de pare-brise pour un véhicule automobile, du type comprenant une partie formant une paroi longitudinale de carrosserie qui délimite une face destinée à être orientée vers l'extérieur du véhicule, et une partie formant une gouttière longitudinale de réception d'un pare-brise du véhicule. La gouttière s'enfonce derrière la paroi de carrosserie et comporte un premier versant définissant un bord longitudinal de la gouttière qui est solidaire dans la continuité d'un bord longitudinal de la paroi de carrosserie, et un second versant délimitant une face interne de la gouttière, sur laquelle le pare-brise est destiné à s'appuyer.

Cette plaque permet de reculer légèrement la fixation du pare-brise dans le montant, ce qui diminue l'angle d'occultation visuel causé par le montant pour le conducteur.

Néanmoins, ce recul est limité si la paroi de carrosserie et la gouttière sont formées par emboutissage de la plaque. En effet, la contre-dépouille, dans le cas contraire, serait trop importante pour sortir la pièce de l'outil d'emboutissage.

L'invention a pour but de permettre un enfoncement plus important de la gouttière derrière la paroi de carrosserie, afin de réduire encore plus l'occultation causée par le montant de pare-brise.

A cet effet, l'invention a pour objet un montant de pare-brise pour un véhicule automobile, du type précité, caractérisé en ce que la gouttière et la paroi sont deux pièces distinctes, et en ce que le bord longitudinal de la gouttière est rapporté par chevauchement sur le bord longitudinal de la paroi de carrosserie.

L'invention peut en outre comporter une ou plusieurs des caractéristiques suivantes :
- le bord de la paroi de carrosserie forme un rebord replié vers l'intérieur du véhicule;
- ledit rebord est replié d'un angle sensiblement droit;
- la gouttière a une section sensiblement en V, ledit bord longitudinal de la gouttière formant un rebord replié vers l'extérieur du V ;
- le V forme un angle inférieur à 120° de préférence de sensiblement 90°;
- le rebord de la gouttière est replié de plus de 15°, de préférence de sensiblement 45°;
- les bords longitudinaux de la gouttière et de la paroi de carrosserie sont solidarisés par fusion de matière ; et
- il comprend un cordon de soudure résultant de la solidarisation des bords longitudinaux de la gouttière et de la paroi de carrosserie par soudo-brasage.

Par ailleurs, l'invention a pour objet un procédé de fabrication d'un montant de pare-brise pour un véhicule automobile, le montant comprenant :
- une paroi longitudinale de carrosserie qui délimite une face destinée à être orientée vers l'extérieur du véhicule, et
- une gouttière longitudinale de réception d'un pare-brise du véhicule, la gouttière s'enfonçant derrière la paroi de carrosserie et comportant :

- un premier versant définissant un bord longitudinal de la gouttière qui est solidaire dans la continuité d'un bord longitudinal de la paroi de carrosserie, et
- un second versant délimitant une face interne de la gouttière, sur laquelle le pare-brise est destiné à s'appuyer,
caractérisé en ce qu'il comprend les étapes suivantes :
- on fabrique la gouttière et la paroi de carrosserie comme deux pièces distinctes,
- on applique par chevauchement le bord longitudinal de la gouttière sur le bord longitudinal de la paroi de carrosserie, et
- on solidarise les bords longitudinaux du premier versant et de la paroi de carrosserie.

Un procédé de fabrication selon l'invention peut en outre comporter la caractéristique selon laquelle lesdits bords longitudinaux du premier versant et de la paroi de carrosserie sont solidarisés par soudo-brasage laser.

L'invention sera mieux comprise à l'aide la description qui va suivre, donnée uniquement à titre d'exemple, et faite en référence aux dessins annexés, parmi lesquels :
- la figure 1 est une vue en perspective d'un montant de pare-brise de véhicule automobile suivant l'invention supportant un pare-brise avant, et
- la figure 2 est une vue en coupe transversale du montant et du pare-brise de la figure 1.

Dans la description qui va suivre, les orientations (avant, arrière, haut, bas, interne, externe, ...) sont données par rapport au véhicule automobile, tandis que les termes « longitudinal » et « transversal » font référence à l'axe X-X' le long duquel s'étend le montant.

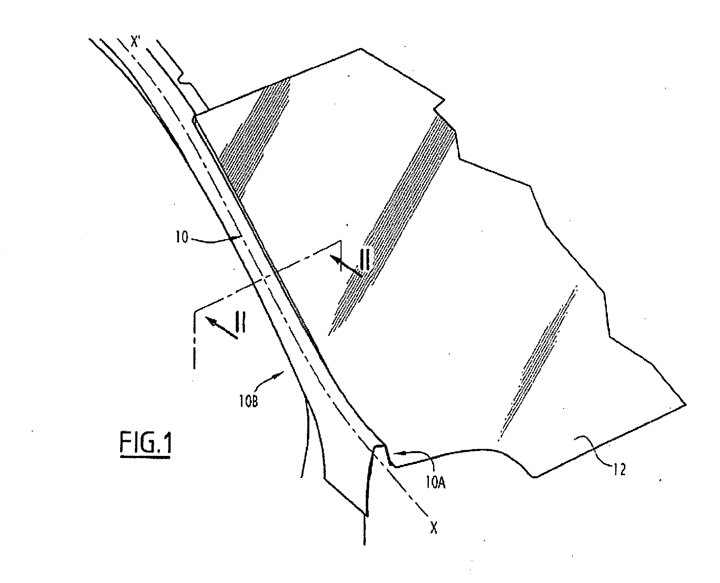

Le montant de pare-brise 10 représenté sur la figure 1 est une pièce de structure reliant un toit du véhicule à un capot avant (non représentés).

Le montant 10 supporte, sur un côté interne 10A, un pare-brise avant 12. Il est par ailleurs destiné à recevoir, sur un côté inférieur 10B, un encadrement (non représenté) de portière avant.

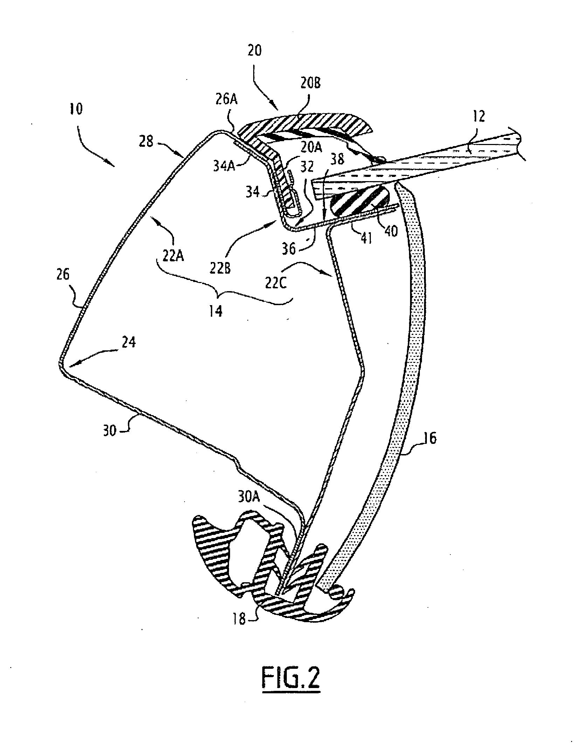

En référence à la figure 2, le montant 10 comprend un élément tubulaire 14 s'étendant sensiblement le long de l'axe X-X', une garniture intérieure 16, un joint d'encadrement de portière 18 et un enjoliveur de pare-brise 20.

L'élément tubulaire 14 comporte trois plaques longitudinales 22A, 22B, 22C, reliées longitudinalement les unes aux autres pour former un profil transversal tubulaire fermé.

La première plaque longitudinale 22A présente une pliure longitudinale 24 qui lui confère un profil transversal général en L.

Cette première plaque 22A définit, au-dessus de la pliure 24, une paroi longitudinale de carrosserie 26, correspondant à la barre verticale du L. La paroi de carrosserie 26 délimite une face 28 destinée à être orientée vers l'extérieur du véhicule. Elle se termine par un rebord longitudinal supérieur 26A, opposé à la pliure 24, recourbé vers l'intérieur du véhicule d'un angle sensiblement droit.

En outre, la première plaque 22A définit, au-dessous de la pliure 24, une paroi longitudinale de réception de portière 30, correspondant à la barre horizontale du L. Cette paroi de réception de portière 30 s'étend vers l'intérieur du véhicule automobile et forme le côté inférieur 10B du montant 10. Elle se termine par un rebord longitudinal inférieur 30A, opposé à la pliure 24, recourbé vers le bas du véhicule d'un angle sensiblement droit.

La deuxième plaque 22B, reliée au rebord supérieur 26A de la première plaque 22A, forme une gouttière de réception du pare-brise 12. A cet effet, elle présente également une pliure longitudinale 32, d'angle sensiblement droit, qui lui confère un profil transversal général en V. La pliure 32 délimite ainsi deux versants 34, 36 de la gouttière 22B.

Le premier versant 34 se termine par un premier rebord longitudinal 34A, recourbé vers l'extérieur de la gouttière 22B d'un angle sensiblement égal à 45°. Ce premier rebord longitudinal 34A est solidaire du rebord longitudinal supérieur 26A de la paroi de carrosserie 26, dans la continuité de celui-ci. Il est rapporté par chevauchement sur ce rebord 26A, sur le côté de ce dernier situé en vis-à-vis de la paroi de réception de portière 30. La solidarisation est réalisée par fusion de matière.

Le second versant 36 délimite une face interne 38 de la gouttière 22B sur laquelle le pare-brise 12 s'appuie par l'intermédiaire d'un joint 40.

La gouttière 22B est orientée de manière à s'enfoncer derrière la paroi de carrosserie 26.

La troisième plaque 22C est conçue de manière qu'elle chevauche le bord inférieur 30A de la première plaque et le second versant 36, les parties se chevauchant étant solidaires l'une de l'autre, par fusion de matière avec apport de matière. La fusion de matière est réalisée par soudo-brasage laser, et laisse un cordon de soudure (non visible sur les figures) à la jonction des bords longitudinaux 26A, 34A de la paroi de carrosserie 26 et du premier versant 34. La plaque 22C a, en section, une forme en V très ouvert, à concavité orientée vers la plaque 22A. Son aile avant présente un rebord 41 replié à environ 90° vers l'extérieur de l'élément tubulaire 14 et rapporté sur le versant 36.

Le joint d'encadrement de portière 18 est monté à cheval sur le chevauchement du bord inférieur 30A et de la troisième plaque 22C.

La garniture intérieure 16 relie le joint d'encadrement de portière 18 au pare-brise 12 en s'étendant sensiblement en face de la troisième plaque 22C.

L'enjoliveur de pare-brise 20 comporte une partie de fixation 20A intercalée entre le pare-brise et le premier versant 34 de la gouttière 22B. Il comporte également une seconde partie 20B qui relie la plaque de carrosserie 26 au côté extérieur du pare-brise, en prolongeant sensiblement la face extérieure 28 de la paroi de carrosserie 26.

Un procédé de fabrication du montant 10 comporte une première étape consistant à fabriquer les trois plaques 22A, 22B, 22C, comme pièces distinctes. La fabrication comporte notamment l'emboutissage des plaques 22A, 22B, 22C pour leur donner le profil désiré.

Il comporte ensuite une deuxième étape consistant à appliquer le rebord longitudinal 34A de la gouttière 22B sur le rebord longitudinal 26A de la paroi de carrosserie 26.

Au cours d'une troisième étape, les rebords longitudinaux 34A, 26A du premier versant 34 et de la paroi de carrosserie 26 sont solidarisés par soudo-brasage laser. Ce type de soudage par apport de matière est avantageux car il ne nécessite pas la présence d'un appareil dans l'espace réduit compris entre la paroi de réception de portière 30 et la gouttière 22B.

Au cours d'une quatrième étape, la troisième plaque est rapportée sur les deux précédentes. Les parties se chevauchant sont solidarisées également en fusionnant leurs matières, par soudure par points.

Une fois le pare-brise 12 posé, la fabrication du montant 10 est complétée en ajoutant, au cours d'une cinquième étape, les joints 18, 20 et la garniture intérieure 16.

## Revendications

1. Montant de pare-brise pour un véhicule automobile, du type comprenant :
- une paroi longitudinale de carrosserie (26) qui délimite une face (28) destinée à être orientée vers l'extérieur du véhicule, et
- une gouttière longitudinale (22B) de réception d'un pare-brise (12) du véhicule, la gouttière (22B) s'enfonçant derrière la paroi de carrosserie (26) et comportant :
- un premier versant (34) définissant un bord longitudinal (34A) de la gouttière (22B) qui est solidaire d'un bord longitudinal (26A) de la paroi de carrosserie (26), dans la continuité de ce bord, et
- un second versant (36) délimitant une face interne (38) de la gouttière (22B), face interne sur laquelle le pare-brise (12) est destiné à s'appuyer,
**caractérisé en ce que** la gouttière (22B) et la paroi (26) sont deux pièces distinctes, et **en ce que** le bord longitudinal (34A) de la gouttière (22B) est rapporté par chevauchement sur le bord longitudinal (26A) de la paroi de carrosserie (26).

2. Montant de pare-brise selon la revendication 1, **caractérisé en ce que** le bord (26A) de la paroi de carrosserie (26) forme un rebord replié vers l'intérieur du véhicule.

3. Montant de pare-brise selon la revendication 2, **caractérisé en ce que** ledit rebord (26A) est replié d'un angle sensiblement droit.

4. Montant de pare-brise selon l'une quelconque des revendications 1 à 3**, caractérisé en ce que** la gouttière (22B) a une section sensiblement en V, ledit bord longitudinal (34A) de la gouttière (22B) formant un rebord replié vers l'extérieur du V.

5. Montant de pare-brise selon la revendication 4, **caractérisé en ce que** le V forme un angle inférieur à 120° de préférence de sensiblement 90°.

6. Montant de pare-brise selon les revendications 4 ou 5, **caractérisé en ce que** le rebord (34A) de la gouttière (22B) est replié de plus de 15°, de préférence de sensiblement 45°.

7. Montant de pare-brise selon l'une quelconque des revendications 1 à 6, **caractérisé en ce que** les bords longitudinaux (26A, 34A) de la gouttière (22B) et de la paroi de carrosserie (26) sont solidarisés par fusion de matière.

8. Montant de pare-brise selon la revendication 7, **caractérisé en ce qu'**il comprend un cordon de soudure résultant de la solidarisation des bords longitudinaux (26A, 34A) de la gouttière (22B) et de la paroi de carrosserie (26) par soudo-brasage.

9. Procédé de fabrication d'un montant (10) de pare-brise pour un véhicule automobile, le montant (10) comprenant :
- une paroi longitudinale de carrosserie (26) qui délimite une face (28) destinée à être orientée vers l'extérieur du véhicule, et
- une gouttière longitudinale (22B) de réception d'un pare-brise (12) du véhicule, la gouttière (22B) s'enfonçant derrière la paroi de carrosserie (26) et comportant :
- un premier versant (34) définissant un bord longitudinal (34A) de la gouttière (22B) qui est solidaire d'un bord longitudinal (26A) de la paroi de carrosserie (26), dans la continuité de ce bord, et
- un second versant (36) délimitant une face interne (38) de la gouttière (22B) sur laquelle le pare-brise (12) est destiné à s'appuyer,
**caractérisé en ce qu'**il comprend les étapes suivantes :
- on fabrique la gouttière (22B) et la paroi de carrosserie (26) comme deux pièces distinctes,
- on applique par chevauchement le bord longitudinal (34A) de la gouttière (22B) sur le bord longitudinal (26A) de la paroi de carrosserie (26), et
- on solidarise les bords longitudinaux (26A, 34A) du premier versant (34) et de la paroi de carrosserie (26).

10. Procédé de fabrication selon la revendication 9, **caractérisé en ce que** lesdits bords longitudinaux (26A, 34A) du premier versant (34) et de la paroi de carrosserie (26) sont solidarisés par soudo-brasage laser.

## Claims

1. Motor vehicle windscreen post of the type comprising:
• a longitudinal body wall (26) that defines a face (28) designed to be oriented towards the outside of the vehicle, and
• a longitudinal gutter (22B) for housing a windscreen (12) belonging to the vehicle, the gutter (22B) sitting behind the body wall (26) and comprising:
• a first flank (34) defining a longitudinal edge (34A) of the gutter (22B) which is joined to a longitudinal edge (26A) of the body wall (26), continuous with this edge, and
• a second flank (36) defining an internal face (38) of the gutter (22B), on which internal face the windscreen is intended to bear,
**characterized in that** the gutter (22B) and the wall (26) are two separate components, and **in that** the longitudinal edge (34A) of the gutter (22B) is joined by overlap to the longitudinal edge (26A) of the body wall (26).

2. Windscreen post according to Claim 1,
**characterized in that** the edge (26A) of the body wall (26) forms a lip which is bent in towards the interior of the vehicle.

3. Windscreen post according to Claim 2,
**characterized in that** said lip (26A) is bent approximately at a right angle.

4. Windscreen post according to any one of Claims 1 to 3, **characterized in that** the gutter (22B) is essentially V-sectioned, said longitudinal edge (34A) of the gutter (22B) forming a lip which is bent out away from the V.

5. Windscreen post according to Claim 4,
**characterized in that** the V forms an angle of less than 120°, preferably approximately 90°.

6. Windscreen post according to Claim 4 or 5,
**characterized in that** the lip (34A) of the gutter (22B) is bent through more than 15°, preferably approximately 45°.

7. Windscreen post according to any one of Claims 1 to 6, **characterized in that** the longitudinal edges (26A, 34A) of the gutter (22B) and the body wall (26) are joined by fusion of material.

8. Windscreen post according to Claim 7,
**characterized in that** it comprises a weld bead resulting from the joining of the longitudinal edges (26A, 34A) of the gutter (22B) and of the body wall (26) by braze welding.

9. Method of manufacturing a motor vehicle windscreen post (10), the post (10) comprising:
• a longitudinal body wall (26) that defines a face (28) designed to be oriented towards the outside of the vehicle, and
• a longitudinal gutter (22B) for housing a windscreen (12) belonging to the vehicle, the gutter (22B) sitting behind the body wall (26) and comprising:
• a first flank (34) defining a longitudinal edge (34A) of the gutter (22B) which is joined to a longitudinal edge (26A) of the body wall (26), continuous with this edge, and
• a second flank (36) defining an internal face (38) of the gutter (22B), on which internal face the windscreen is intended to bear,
**characterized in that** it comprises the following steps:
• the gutter (22B) and the body wall (26) are produced as two separate components,
• the longitudinal edge (34A) of the gutter (22B) is applied in such a way as to overlap the longitudinal edge (26A) of the body wall (26), and
• the longitudinal edges (26A, 34A) of the first flank (34) and of the body wall (26) are joined.

10. Manufacturing method according to Claim 9,
**characterized in that** said longitudinal edges (26A, 34A) of the first flank (34) and of the body wall (26) are joined by laser braze welding.

## Patentansprüche

1. Windschutzscheibensäule für ein Kraftfahrzeug von dem Typ, die enthält:
- eine Karosserie-Längswand (26), die eine Seite (28) begrenzt, welche dazu bestimmt ist, zur Außenseite des Fahrzeugs gerichtet zu sein, und
- eine Längsrinne (22B) zur Aufnahme einer Windschutzscheibe (12) des Fahrzeugs, wobei die Rinne (22B) sich hinter der Karosseriewand (26) eindrückt und aufweist:
- eine erste Schräge (34), die einen Längsrand (34A) der Rinne (22B) definiert, der mit einem Längsrand (26A) der Karosseriewand (26) in der Fortsetzung dieses Rands fest verbunden ist, und
- eine zweite Schräge (36), die eine Innenseite (38) der Rinne (22B) definiert, Innenseite, auf der die Windschutzscheibe (12) sich abstützen soll,
**dadurch gekennzeichnet, dass** die Rinne (22B) und die Wand (26) zwei getrennte Bauteile sind, und dass der Längsrand (34A) der Rinne (22B) durch Überlappen auf den Längsrand (26A) der Karosseriewand (26) aufgesetzt wird.

2. Windschutzscheibensäule nach Anspruch 1, **dadurch gekennzeichnet, dass** der Rand (26A) der Karosseriewand (26) eine zur Innenseite des Fahrzeugs umgebogene Randleiste bildet.

3. Windschutzscheibensäule nach Anspruch 2, **dadurch gekennzeichnet, dass** die Randleiste (26A) um einen im Wesentlichen rechten Winkel umgebogen ist.

4. Windschutzscheibensäule nach einem der Ansprüche 1 bis 3, **dadurch gekennzeichnet, dass** die Rinne (22B) einen im Wesentlichen V-förmigen Querschnitt hat, wobei der Längsrand (34A) der Rinne (22B) eine zur Außenseite des V umgebogene Randleiste bildet.

5. Windschutzscheibensäule nach Anspruch 4, **dadurch gekennzeichnet, dass** das V einen Winkel von weniger als 120°, vorzugsweise von im Wesentlichen 90°, bildet.

6. Windschutzscheibensäule nach einem der Ansprüche 4 oder 5, **dadurch gekennzeichnet, dass** die Randleiste (34A) der Rinne (22B) um mehr als 15°, vorzugsweise um im Wesentlichen 45°, umgebogen ist.

7. Windschutzscheibensäule nach einem der Ansprüche 1 bis 6, **dadurch gekennzeichnet, dass** die Längsränder (26A, 34A) der Rinne (22B) und der Karosseriewand (26) durch Materialverschmelzung fest miteinander verbunden werden.

8. Windschutzscheibensäule nach Anspruch 7, **dadurch gekennzeichnet, dass** sie eine Schweißnaht aufweist, die aus der festen Verbindung der Längsränder (26A, 34A) der Rinne (22B) und der Karosseriewand (26) durch Schweißlöten resultiert.

9. Verfahren zur Herstellung einer Windschutzscheibensäule (10) für ein Kraftfahrzeug, wobei die Säule (10) enthält:
- eine Karosserie-Längswand (26), die eine Seite (28) begrenzt, die dazu bestimmt ist, nach außerhalb des Fahrzeugs gerichtet zu sein, und
- eine Längsrinne (22B) zur Aufnahme einer Windschutzscheibe (12) des Fahrzeugs, wobei die Rinne (22B) sich hinter der Karosseriewand (26) eindrückt und aufweist:
- eine erste Schräge (34), die einen Längsrand (34A) der Rinne (22B) definiert, der mit einem Längsrand (26A) der Karosseriewand (26) in der Fortsetzung dieses Rands fest verbunden ist, und
- eine zweite Schräge (36), die eine Innenseite (38) der Rinne (22B) begrenzt, auf der die Windschutzscheibe (12) sich abstützen soll,
**dadurch gekennzeichnet, dass** es die folgenden Schritte enthält:
- die Rinne (22B) und die Karosseriewand (26) werden als zwei getrennte Bauteile hergestellt,
- der Längsrand (34A) der Rinne (22B) wird durch Überlappen auf den Längsrand (26A) der Karosseriewand (26) aufgebracht, und
- die Längsränder (26A, 34A) der ersten Schräge (34) und der Karosseriewand (26) werden fest miteinander verbunden.

10. Herstellungsverfahren nach Anspruch 9, **dadurch gekennzeichnet, dass** die Längsränder (26A, 34A) der ersten Schräge (34) und der Karosseriewand (26) durch Laser-Schweißlöten fest miteinander verbunden werden.
